# NEUE EUROPÄISCHE PATENTSCHRIFT

(11) **EP 2 705 315 B2**
(45) Veröffentlichungstag und Bekanntmachung des Hinweises auf die Entscheidung über den Einspruch: **07.09.2022**
(45) Hinweis auf die Patenterteilung: 08.03.2017
(21) Anmeldenummer: 12718226.9
(22) Anmeldetag: 03.05.2012
(51) Int. Cl.: F25D 23/06

(54) **KÄLTEGERÄT, INSBESONDERE HAUSHALTSKÄLTEGERÄT**
REFRIGERATOR, IN PARTICULAR DOMESTIC REFRIGERATOR
APPAREIL DE FROID, EN PARTICULIER APPAREIL DE FROID MÉNAGER

(30) Priorität: 06.05.2011 DE 102011075390
(43) Veröffentlichungstag der Anmeldung: 12.03.2014
(73) Patentinhaber: BSH Hausgeräte GmbH, 81739 München (DE)
(72) Erfinder: STELZER, Jörg, 89537 Giengen (DE); WENDLAND, Heiko, 89415 Lauingen (DE); ZIMMERMANN, Martin, 89073 Ulm (DE)
(86) Internationale Anmeldenummer: PCT/EP2012/058108
(87) Internationale Veröffentlichungsnummer: WO 2012/152646

(56) Entgegenhaltungen:
- WO-A1-2009/147102
- DE-A1-102008 026 528
- JP-A- 5 157 446
- JP-A- 58 106 374
- JP-A- 63 220 075
- JP-A- S61 116 273
- JP-A- S61 116 273
- US-A- 5 082 335
- US-A- 6 164 030

## Beschreibung

Die Erfindung betrifft ein Kältegerät nach dem Oberbegriff des Patentanspruches 1 sowie ein Verfahren zur Herstellung eines solchen Kältegerätes nach dem Patentanspruch 6.

Im Kältemittelkreislauf eines Kältegerätes ist unter anderem ein Verflüssiger geschaltet, mit dem die, dem Kühlraum entzogene Wärme an die Umgebung abgegeben wird. Derartige Verflüssiger werden üblicherweise außenseitig auf der Rückseite des Kältegerätes angeordnet. Alternativ dazu sind Seitenwandverflüssiger, sogenannte Skin-Condenser, bekannt, die in einer Seitenwand des Kältegerätes eingeschäumt sind, wodurch die Rückwand des Kältegeräts geschlossen und ebenflächig gestaltet werden kann.

Bei einem gattungsgemäßen Kältegerät ist ein, den Kühlraum begrenzendes Gehäuse und eine Gerätetür vorgesehen, die jeweils innere und äußere Begrenzungswände sowie eine dazwischen, durch Aufschäumen erzeugte Wärmeisolierschicht aufweisen, in der eine Kältegerätekomponente, etwa der oben genannte Verflüssiger, eingebracht sein kann.

Zur Steigerung der Energieeffizienz solcher Kältegeräte ist es erforderlich, den in der Seitenwand integrierten Verflüssiger weitestgehend thermisch von dem Kühlraum zu entkoppeln. Hierzu ist allgemein der Einsatz von Vakuumisolationspaneelen bekannt, die zusätzlich in die Wärmeisolierschicht eingebracht sind, um den Verflüssiger verstärkt vom Kühlraum thermisch zu entkoppeln. Ein derartiges Vakuumisolationspaneel wird üblicherweise vor der Durchführung eines Isolierschäumschrittes mit Hilfe eines doppelseitigen Klebebandes am Verflüssiger befestigt. Aufgrund der nur sehr geringen Kontaktfläche zwischen dem Vakuumisolationspaneel und dem Verflüssiger ist jedoch nur eine unzureichend feste Vorpositionierung des Wärmeisolationspaneels möglich, wodurch dieses bei der anschließenden Isolierschäumung nachteilig verlagert werden kann.

Aus der DE 10 2008 026 528 A1 ist bekannt, vor der Durchführung des Isolierschäumschrittes das Vakuumisolationspaneel mit einer dünnen Flüssighaftmittel-Schicht an der Innenseite einer Begrenzungswand zu befestigen. Anschließend wird eine Isolierschäumung durchgeführt. Wirtschaftlich sinnvoll ist es gemäß dieser Druckschrift, die Dicke der Flüssighaftmittelschicht auf 3 bis 4 mm auszulegen.

Aus der JPS61116272A ist ein wärmeisolierender Körper zur Verwendung unter anderem in einem Kühlschrank oder einem Gefrierschrank bekannt.

Die Aufgabe der Erfindung besteht darin, ein Kältegerät, insbesondere Haushaltskältegerät, sowie ein Verfahren zu dessen Herstellung bereitzustellen, das im Rahmen einer Großserienproduktion einen einwandfreien sowie fertigungstechnisch einfachen Aufbau des Kältegerätes ermöglicht.

Die Aufgabe ist durch die Merkmale des Patentanspruches 1 oder des Patentanspruches 3 gelöst. Bevorzugte Weiterbildungen der Erfindung sind in den abhängigen Ansprüchen offenbart.

Die Erfindung betrifft ein Kältegerät mit einem, einen Kühlraum begrenzenden Gehäuse und einer Gerätetür, die jeweils innere und äußere Begrenzungswände sowie eine zwischen diesen durch Aufschäumen erzeugte Wärmeisolierschicht aufweisen. In der Wärmeisolierschicht ist eine Kältegerätekomponente, etwa ein Verflüssiger, eingebracht. Zur Steigerung der Energieeffizienz ist zusätzlich ein Vakuumisolationspaneel in die Wärmeisolierschicht integriert. Das Vakuumisolationspaneel ist mit einem aufschäumbaren Flüssighaftmittel an einer ersten der beiden Begrenzungswände befestigt. Um eine einwandfreie Halterung zu gewährleisten, kann die Kältegerätekomponente zwischen der ersten Begrenzungswand und dem Vakuumisolationspaneel unmittelbar im aufschäumbaren Flüssighaftmittel integriert sein. Das Flüssighaftmittel kann die Kältegerätekomponente zumindest nahezu vollständig umschließen, wodurch eine sichere Halterung der Kältegerätekomponente erzielbar ist. Eine solche lagefeste Halterung ist insbesondere beim Isolierschäumungsvorgang erforderlich, bei dem unter Druckaufbau eine flüssige Ausgangskomponente der Wärmeisolierschicht zwischen die Begrenzungswände eingebracht wird und anschließend unter Druckaufbau aufgeschäumt sowie verdichtet wird.

Das Kältegerät wird zur Haushaltsführung eingesetzt und kann beispielhaft ein Kühlschrank, ein Gefrierschrank, eine Gefriertruhe, ein Weinlagerschrank oder eine Kühl-/Gefrierkombination sein.

Unter einem aushärtbaren bzw. aufschäumbaren Flüssighaftmittel sind Stoffe und Stoffgemische zu verstehen, die nach ihrer Reaktion mit Luftsauerstoff oder einer anderen Reaktionskomponente von ihrem flüssigen, teigigen Zustand sich zumindest bis in einen zähelastischen, jedoch vorzugsweise harten Zustand verfestigen. Bevorzugt kann das Flüssighaftmittel und auch die Wärmeisolierschicht ein Polyurethan-Schaum sein, der als Treibmittel Pentan aufweist. Das Flüssighaftmittel kann zur Durchführung des Vorschäum-Schrittes punktförmig, linienförmig oder in beliebiger freier Form aufgetragen werden.

Insbesondere im Hinblick auf eine Großserienproduktion ist es von Vorteil, dass die oben erwähnte erste der beiden Begrenzungswände zusammen mit der Kältegerätekomponente und dem Vakuumisolationspaneel mit dem Flüssighaftmittel zu einem stabilen Verbundkörper beziehungsweise einer Vormontageeinheit zusammengefügt ist. Das Flüssighaftmittel kann hierzu in einem ersten Vorschäum-Schritt aufgeschäumt und ausgehärtet werden, um einen solchen festen Bauteilverbund zu erzielen. Anschließend kann der Bauteilverbund in eine Schäumungsanlage geführt werden, in der in einem Isolierschäum-Schritt die noch flüssige Wärmeisolierschicht zwischen den beiden Begrenzungswänden aufgeschäumt und ausgehärtet wird.

Der erfindungsgemäß erreichte Materialaufbau weist demzufolge die beiden inneren und äußeren Begrenzungswände auf, von denen an der Innenseite der ersten Begrenzungswand die Kältegerätekomponente unmittelbar in Anlage gebracht sein kann. Sofern die Kältegerätekomponente ein Seitenwand-Verflüssiger ist, kann dieser unmittelbar an der Innenseite einer äußeren Begrenzungswand in Anlage sein, um eine Wärmeabfuhr zur Umgebung zu gewährleisten. Das Vakuumisolationspaneel ist demgegenüber um eine Schichtdicke von der Kältegerätekomponente beabstandet. Zwischen dem Vakuumisolationspaneel und der Kältegerätekomponente besteht daher wärmetechnisch vorteilhaft kein Kontakt. Die Schichtdicke ist dabei derart bemessen, dass sich im oben erwähnten Vorschäum-Schritt das aufschäumbare Flüssighaftmittel vollflächig im Zwischenraum zwischen der Kältegerätekomponente und dem Vakuumisolationspaneel verteilen kann, ohne dass Lufteinschlüsse verbleiben. Zudem kann das Vakuumisolationspaneel um eine weitere Schichtdicke von der zweiten Begrenzungswand beabstandet sein. Die zweite Schichtdicke ist derart bemessen, dass beim nachfolgenden Isolierschäum-Schritt ebenfalls ein ausreichend großer Zwischenraum vorhanden ist, durch den das noch flüssige Wärmeisolationsschaummaterial fließen kann, ohne dass Lufteinschlüsse verbleiben.

Erfindungsgemäß ist das Flüssighaftmittel als eine aufschäumbare Wärmeisolierschicht gebildet ist. Auf diese Weise kann nach dem Isolierschäum-Schritt eine feste, stoffschlüssige Haftverbindung zwischen der Wärmeisolierschicht und dem Flüssighaftmittel erzielt werden.

Zur Herstellung der oben erwähnten Vormontageeinheit wird in dem Vorschäum-Schritt das Vakuumisolationspaneel mit Hilfe des Flüssighaftmittels an der Innenseite der ersten Begrenzungswand des Kältegeräte-Gehäuses oder der Gerätetür befestigt. Die Befestigung erfolgt dabei unter Zwischenlage der Kältemittelkomponente. Zur Realisierung des Herstellungsverfahrens kann zunächst das Vakuumisolationspaneel in den Kammerboden einer Schäumungskammer eines Formwerkzeuges gelegt werden. Auf der, dem Kammerboden abgewandten Seite kann dann das Flüssighaftmittel auf das Vakuumisolationspaneel aufgetragen werden. Anschließend wird die Schäumungskammer von der ersten Begrenzungswand geschlossen, und zwar bis im Vorschäum-Schritt das Flüssighaftmittel aufgeschäumt und ausgehärtet ist. Die Schäumungskammer ist bevorzugt so ausgelegt, dass die Randzonen des Vakuumisolationspaneels in Anlage sind mit den seitlichen, vom Kammerboden hochgezogenen Kammerwänden. Auf diese Weise kann der Entformungsvorgang nach erfolgtem Vorschäum-Schritt vereinfacht werden, da die Randzonen des Vakuumisolationspaneels nicht beziehungsweise nur geringfügig an den Kammer-Seitenwänden anhaften.

Vor der Durchführung des Vorschäum-Schrittes kann die Kältegerätekomponente zum Beispiel durch Klebstellen an der Innenseite der ersten Begrenzungswand vorpositioniert werden, mit der die Schäumungskammer abgedeckt wird. Bei der Durchführung des Vorschäum-Schrittes wird die Schäumungskammer zwischen der ersten Begrenzungswand und dem Vakuumisolationspaneel vollständig mit dem aufschäumenden Flüssighaftmittel ausgefüllt. Anschließend wird das Formwerkzeug in einer Entformungsrichtung von dem gebildeten Verbundkörper entfernt.

Beim oben angegebenen Vorschäum-Schritt bleibt das Vakuumisolationspaneel ortsfest ausgerichtet auf dem Kammerboden der Schäumungskammer liegen. Alternativ zum oben genannten Herstellungsverfahren kann das Flüssighaftmittel unmittelbar auf die Innenseite der ersten Begrenzungswand aufgetragen werden, auf der zudem auch die Kältegerätekomponente vorpositioniert ist. Anschließend wird das Vakuumisolationspaneel auf das Flüssighaftmittel gelegt und der so gebildete Verbundkörper mit einem haubenförmigen Formwerkzeug schaumdicht abgeschlossen. Beim Aufschäumen des Flüssighaftmittels wird daher das Vakuumisolationspaneel angehoben, bis es gegen das Formwerkzeug drückt. Das Formwerkzeug wird erst dann in einer Entformungsrichtung entfernt, wenn das Flüssighaftmittel aufgeschäumt und ausgehärtet ist. Beim Aufschäumen sowie Aushärten des Flüssighaftmittels sind die Oberkante der, die Schäumungskammer begrenzenden Seitenwände des haubenförmigen Formwerkzeugs in Anlage mit der Innenseite der ersten Begrenzungswand gebracht. Das heißt, dass die Höhe dieser Seitenwände die Bauteilhöhe des Verbundkörpers beziehungsweise der Vormontageeinheit definiert.

Nach dem Vorschäum-Schritt folgt der Isolierschäum-Schritt, bei dem die zwischen der ersten und der zweiten Begrenzungswand eingebrachte Wärmeisolierschicht aufgeschäumt und ausgehärtet wird.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie der Vorteile werden nachfolgend von Zeichnungen näher erläutert.

Es zeigen:
- Fig. 1: in einer perspektivischen Darstellung ein Kältegerät mit einem in eine Seitenwand eingeschäumten Verflüssiger;
- Fig. 2: eine Schnittdarstellung entlang der Schnittebene I-I aus der Fig. 1;
- Fig. 3 bis 6: jeweils Ansichten, die ein Verfahren zur Herstellung des Kältegeräte-Gehäuses gemäß dem ersten Ausführungsbeispiel veranschaulichen; und
- Fig. 7 und 8: jeweils Ansichten entsprechend der Fig. 3 bis 5 zur Veranschaulichung eines Herstellungsverfahrens gemäß dem zweiten Ausführungsbeispiel.

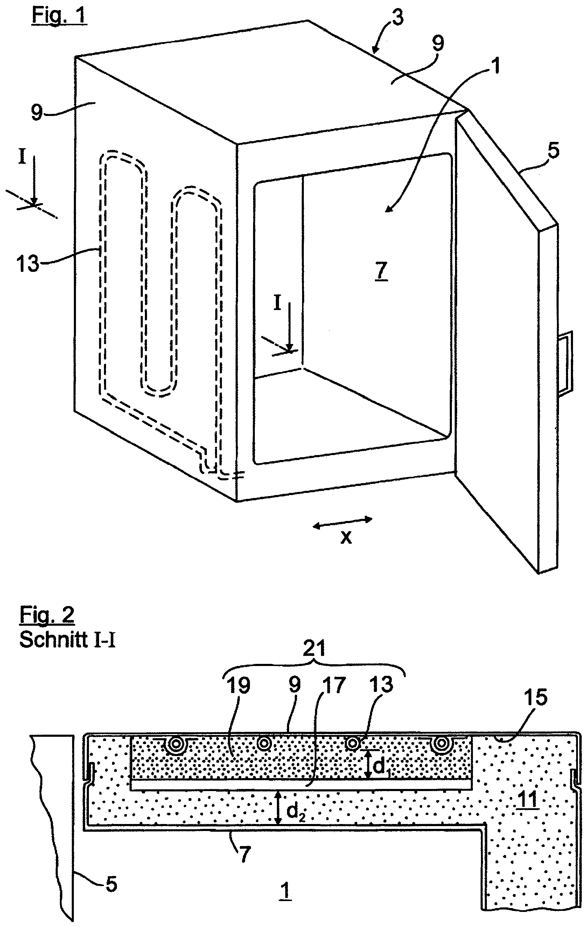

In der Fig. 1 ist ein Kältegerät mit einem, einen Kühlraum 1 definierenden Gehäuse 3 sowie einer daran seitlich angelenkten Gerätetür 5 gezeigt. Das Kältegeräte-Gehäuse 3 weist einen Kunststoff-Innenbehälter 7 sowie Geräteaußenwände 9 auf, zwischen denen jeweils eine, durch Aufschäumen erzeugte Wärmeisolierschicht 11 eingebracht ist. In gleicher Weise ist auch die Gerätetür 5 wärmeisolierend aufgebaut, die jeweils eine Innenverkleidung und eine Außenverkleidung mit dazwischen liegender Wärmeisolierschicht aufweist. Zudem ist in einer, in der Fig. 1 in der Geräteseitenrichtung x vorderen Seitenwand des Gehäuses 3 ein Verflüssiger 13 vorgesehen, dessen mäanderförmig verlaufende Verflüssiger-Rohrleitung zwischen dem Innenbehälter 7 und der Geräteaußenwand 9 eingeschäumt ist. Der Verflüssiger 13 ist zusammen mit weiteren Komponenten Bestandteil eines an sich bekannten Kältemittelkreislaufes und bewirkt im Kältebetrieb eine Wärmeabfuhr an die Umgebung.

In der Fig. 2 ist der Aufbau der Seitenwand des Gehäuses 3 in einer Schnittdarstellung gezeigt. Demzufolge ist die Verflüssiger-Rohrleitung 13 unmittelbar in Anlage mit der Innenseite 15 der Geräteaußenwand 9. Um eine Schichtdicke d₁ vom Verflüssiger 13 beabstandet ist ein Vakuumisolationspaneel 17 vorgesehen, das planparallel zwischen der Geräteaußenwand 9 und der inneren Seitenwand des Innenbehälters 7 angeordnet ist. Das Vakuumisolationspaneel 17 dient zur thermischen Entkopplung des Verflüssigers 13 vom Kühlraum 1. Das Vakuumisolationspaneel 17 ist zudem über eine weitere Schichtdicke d₂ von der Seitenwand des Innenbehälters 7 beabstandet.

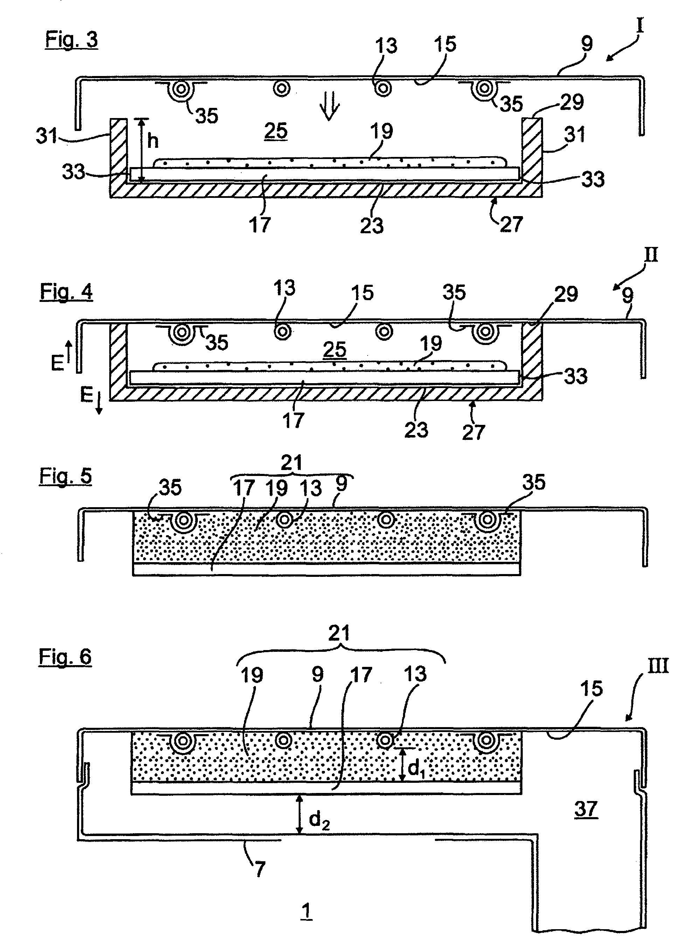

Die Geräteaußenwand 9, der Verflüssiger 13 sowie das Vakuumisolationspaneel 17 sind mit Hilfe eines aufgeschäumten Flüssighaftmittels 19 bereits vor dem Zusammenbau mit dem Innenbehälter 7 zu einer Vormontageeinheit 21 zusammengefügt. Die Herstellung dieser Vormontageeinheit 21 wird nachfolgend anhand der Fig. 3 bis 5 erläutert. Gemäß der Fig.3 wird das Vakuumisolationspaneel 17 zunächst in einem ersten Verfahrensschritt I auf den Kammerboden 23 einer nach oben offenen Schäumungskammer 25 eines Formwerkzeuges 27 gelegt. Anschließend wird auf die vom Kammerboden 23 abgewandten Seite des Vakuumisolationspaneels 17 das Flüssighaftmittel 19 in noch flüssigem Zustand aufgetragen. Darauffolgend wird zum Starten eines Vorschäum-Schrittes II gemäß der Fig. 4 die Geräteaußenwand 9 mit ihrer Innenseite 15 auf die Oberkante 29 der Seitenwände 31 der Schäumungskammer 25 gelegt, und zwar so, dass die Kammer 25 nach außen hin schaumdicht geschlossen ist. Die Schäumungskammer 25 wird geschlossen gehalten, bis im Vorschäum-Schritt II das Flüssighaftmittel 19 aufgeschäumt und ausgehärtet ist. Anschließend werden die Geräteaußenwand 9 und das Formwerkzeug 27 in Entformungsrichtungen E (Fig. 4) auseinander bewegt. Wie aus den Fig. 3 und 4 hervorgeht, sind die Randzonen 33 des Vakuumisolationspaneels 17 unmittelbar in Anlage mit den Seitenwänden 31 der Schäumungskammer 25. Dadurch kann eine, das Entformen beeinträchtigende Haftverbindung zwischen dem Vakuumisolationspaneel 17 und dem Formwerkzeug 27 vermieden werden. Zudem definiert die Höhe h (Fig. 3) der Seitenwand 31 die Schichtdicke des aufgeschäumten Flüssighaftmittels 19.

Die Verflüssiger-Rohrleitung 13 ist gemäß den Fig. 3 bis 5 über schematisch angedeutete Klebebänder 35 an der Innenseite 15 der Gehäuseaußenwand 9 vorpositioniert, um eine dichte Anlage an der Gehäuseaußenwand 9 zu gewährleisten.

Nach der Herstellung des in der Fig. 5 gezeigten Verbundkörpers 21 wird dieser zur Vorbereitung eines Isolierschäum-Schritts III (Fig. 6) in einer Schäumungsanlage mit dem Innenbehälter 7 zusammengefügt. Das Vakuumisolationspaneel 17 ist in der Fig. 6 bereits lagerichtig mit einem vordefinierten Abstand zum Innenbehälter 7, der der Schichtdicke d₂ entspricht, positioniert. Anschließend erfolgt eine Isolierschäumung, bei der in den noch freien Hohlraum 37 eine flüssige Ausgangskomponente der Wärmeisolierschicht 11 eingebracht und anschließend aufgeschäumt wird.

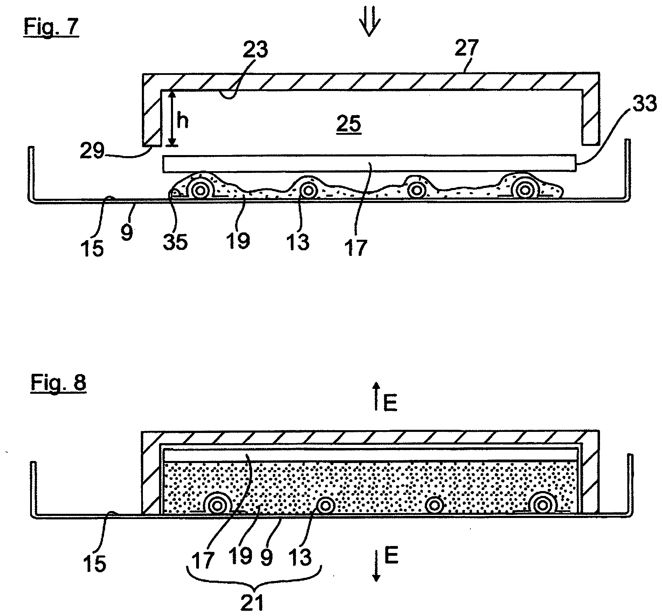

In dem anhand der Fig. 3 bis 6 gezeigten Verfahren bleibt das Vakuumisolationspaneel 17 dauerhaft ortsfest auf dem Kammerboden 23 des Formwerkzeugs 27 liegen. Demgegenüber ist in den Fig. 7 und 8 die Herstellung des Verbundkörpers 21 gemäß dem zweiten Ausführungsbeispiel dargestellt, wonach das Vakuumisolationspaneel 17 beim Vorschäumen nach oben gegen den Kammerboden 23 des Formwerkzeugs 27 gedrückt wird. Demzufolge wird zunächst zur Vorbereitung des Vorschäum-Schrittes II auf die Innenseite 15 der Gehäuseaußenwand 9 das Flüssighaftmittel 19 aufgetragen. Das Flüssighaftmittel 19 kann dabei die ebenfalls auf der Innenseite 15 vorpositionierte Verflüssiger-Rohrleitung 13 zumindest teilweise überdecken. Anschließend wird auf das noch flüssige Flüssighaftmittel 19 das Vakuumisolationspaneel 17 gelegt. Über den noch losen Bauteilverbund, bestehend aus dem Vakuumisolationspaneel 17 und der Gehäuseaußenwand 9, wird das haubenförmige Formwerkzeug 27 schaumdicht aufgesetzt. Während des Vorschäum-Schrittes II wird dann das Flüssighaftmittel 19 aufgeschäumt und ausgehärtet. Anschließend werden das Formwerkzeug 27 und die Gehäuseaußenwand 9 in den Entformungsrichtungen E voneinander getrennt.

### BEZUGSZEICHENLISTE

- 1: Kühlraum
- 3: Gehäuse
- 5: Gerätetür
- 7: Innenbehälter
- 9: Geräteaußenwand
- 11: Wärmeisolierschicht
- 13: Verflüssiger
- 15: Innenseite
- 17: Vakuumisolationspaneel
- 19: Flüssighaftmittel
- 21: Verbundkörper, Vormontageeinheit
- 23: Kammerboden
- 25: Schäumungskammer
- 27: Formwerkzeug
- 29: Oberkante
- 31: Seitenwand
- 33: Randzone
- 35: Klebeband
- 37: Hohlraum
- d₁, d₂: Schichtdicken
- h: Kantenhöhe
- E: Entformungsrichtung
- I, II, III: Verfahrensschritte

## Patentansprüche

1. Kältegerät, insbesondere Haushaltskältegerät, mit einem, einen Kühlraum (1) begrenzenden Gehäuse (3) und einer Gerätetür (5), die jeweils innere und äußere Begrenzungswände (7, 9) sowie eine zwischen diesen durch Aufschäumen erzeugte Wärmeisolierschicht (11) aufweisen, wobei zusätzlich zwischen den Begrenzungswänden (7,9) ein Isolationselement, insbesondere ein Vakuumisolationspaneel (17), vorgesehen ist, und wobei in der Wärmeisolierschicht (11) eine Kältegerätekomponente, etwa ein Verflüssiger (13), eingebracht ist, und wobei das Isolationselement unter Zwischenlage der Kältegerätekomponente (13) an einer der beiden Begrenzungswände (7, 9) befestigt ist, wobei das Vakuumisolationspaneel (17) um eine Schichtdicke (d₁) von der Kältegerätekomponente (13) beabstandet ist ist, **dadurch gekennzeichnet, dass** das Vakuumisolationspaneel (17) mit einem aufschäumbaren Flüssighaftmittel (19), welches als eine aufschäumbare Wärmeisolierschicht gebildet ist und materialgleich mit der Wärmeisolierschicht (11), an einer der beiden Begrenzungswände (7, 9) befestigt ist und dass eine erste Begrenzungswand (9), das Vakuumisolationspaneel (17) und die Kältegerätekomponente (13) mit dem Flüssighaftmittel (19) zu einem Verbundkörper (21) beziehungsweise einer Vormontageeinheit zusammengefügt ist.

2. Kältegerät nach einem der Ansprüche 1, **dadurch gekennzeichnet, dass** die Kältegerätekomponente (13) in Anlage mit der Innenseite (15) der ersten Begrenzungswand (9) ist und/oder um eine zweite Schichtdicke (d₂) von der zweiten Begrenzungswand (7) beabstandet ist.

3. Verfahren zur Herstellung eines Kältegeräts nach einem der vorgehenden Ansprüche, bei dem ein Isolationselement, insbesondere ein Vakuumisolationspaneel (17), mit einem Flüssighaftmittel (19), welches materialgleich mit der Wärmeisolierschicht (11) gebildet ist, an der Innenseite (15) einer Begrenzungswand (9) eines Kältegeräte-Gehäuses (3) oder einer Kältegerätekühltür (5) befestigt wird.

4. Verfahren nach Anspruch 3, **dadurch gekennzeichnet, dass** das Isolationselement unter Zwischenlage einer Kältemittelkomponente (13), etwa eines Verflüssigers, an der Innenseite (15) der Begrenzungswand (9) befestigt wird.

5. Verfahren nach Anspruch 3 oder 4, **dadurch gekennzeichnet, dass** zur Vorbereitung eines Vorschäum-Schritts (II) das Vakuumisolationspaneel (17) in eine Schäumungskammer (25) eines Formwerkzeugs (27) gelegt wird, auf die vom Kammerboden (23) abgewandte Seite des Vakuumisolationspaneels (17) das Flüssighaftmittel (19) aufgetragen wird und anschließend die Schäumungskammer (25) von der ersten Begrenzungswand (9) geschlossen wird, bis im Vorschäum-Schritt (II) das Flüssighaftmittel (19) aufgeschäumt und ausgehärtet ist.

6. Verfahren nach Anspruch 5, **dadurch gekennzeichnet, dass** beim Einlegen des Vakuumisolationspaneels (17) in die Schäumungskammer (25) die Randzonen (33) der Vakuumisolationspaneel (17) in Anlage mit den seitlichen Kammerwänden (31) der Schäumungskammer (25) gebracht werden.

7. Verfahren nach Anspruch 5 oder 6, **dadurch gekennzeichnet, dass** die Kältegerätekomponente (13) vor der Durchführung des Vorschäum-Schrittes (II), insbesondere mittels Klebstellen (35), an der Innenseite (15) der ersten Begrenzungswand (9) vorpositioniert wird.

8. Verfahren nach Anspruch 5, **dadurch gekennzeichnet, dass** zur Vorbereitung eines Vorschäum-Schritts (II) das Flüssighaftmittel (19) auf die Innenseite (15) der ersten Begrenzungswand (9) aufgetragen wird und das Vakuumisolationspaneel (17) auf das Flüssighaftmittel (19) gelegt wird, wobei anschließend der so gebildete lose Bauteilverbund mit einem haubenförmigen Formwerkzeug (27) schaumdicht abgeschlossen wird, bis im Vorschäum-Schritt (II) das Flüssighaftmittel (19) aufgeschäumt und ausgehärtet ist.

9. Verfahren nach einem der Ansprüche 3 bis 8, **dadurch gekennzeichnet, dass** nach dem Vorschäum-Schritt (II) ein Isolierschäum-Schritt (III) folgt, bei dem die zwischen der ersten und zweiten Begrenzungswand (7, 9) eingebrachte Wärmeisolierschicht (11) aufgeschäumt und ausgehärtet wird

## Claims

1. Refrigerator, in particular household refrigerator, having a housing (3), which bounds a refrigeration space (1), and an appliance door (5) which in each case have inner and outer boundary walls (7, 9) and a heat insulation layer (11) between these that is generated by foaming, wherein an insulation element, in particular a vacuum insulation panel (17), is additionally provided between the boundary walls (7, 9), and wherein a refrigerator component such as a condenser (13) is introduced in the heat insulation layer (11), and wherein the insulation element is attached to one of the two boundary walls (7, 9) with interposition of the refrigerator component (13), wherein the vacuum insulation panel (17) is spaced apart from the refrigerator component (13) by a layer thickness (di), **characterised in that** the vacuum insulation panel (17) is attached to one of the two boundary walls (7, 9) using a foamable liquid adhesive (19) which is formed as a foamable heat insulation layer and is made of the same material as the heat insulation layer (11), and that a first boundary wall (9), the vacuum insulation panel (17) and the refrigerator component (13) are assembled using the liquid adhesive (19) to form a composite body (21) or a pre-assembly unit.

2. Refrigerator according to claim 1, **characterised in that** the refrigerator component (13) abuts the inside (15) of the first boundary wall (9) and/or is spaced apart from the second boundary wall (7) by a second layer thickness (d₂).

3. Method for producing a refrigerator according to one of the preceding claims, in which an insulation element, in particular a vacuum insulation panel (17), is attached using a liquid adhesive (19), which is formed of the same material as the heat insulation layer (11), to the inside (15) of a boundary wall (9) of a refrigerator housing (3) or a refrigerator door (5).

4. Method according to claim 3, **characterised in that** the insulation element is attached to the inside (15) of the boundary wall (9) with interposition of a refrigerant component (13), such as a condenser.

5. Method according to claim 3 or 4, **characterised in that** in preparation for a pre-foaming step (II) the vacuum insulation panel (17) is placed into a foaming chamber (25) of a moulding tool (27), the liquid adhesive (19) is applied to the side of the vacuum insulation panel (17) facing away from the chamber bottom (23) and then the foaming chamber (25) is closed by the first boundary wall (9), until in the pre-foaming step (II) the liquid adhesive (19) is foamed and cured.

6. Method according to claim 5, **characterised in that** during the insertion of the vacuum insulation panel (17) into the foaming chamber (25) the edge zones (33) of the vacuum insulation panels (17) are brought into abutment with the lateral chamber walls (31) of the foaming chamber (25).

7. Method according to claim 5 or 6, **characterised in that** the refrigerator component (13), prior to the performance of the pre-foaming step (II), is pre-positioned on the inside (15) of the first boundary wall (9), in particular by means of adhesion points (35).

8. Method according to claim 5, **characterised in that** in preparation for a pre-foaming step (II) , the liquid adhesive (19) is applied to the inside (15) of the first boundary wall (9) and the vacuum insulation panel (17) is placed onto the liquid adhesive (19), wherein the thus formed loose component assembly is then closed in a foam-tight manner with a hood-shaped mould (27) until in the pre-foaming step (II) the liquid adhesive (19) is foamed and cured.

9. Method according to one of claims 3 to 8, **characterised in that** the pre-foaming step (II) is followed by an insulating foam step (III), in which the heat insulating layer (11) introduced between the first and second boundary wall (7, 9) is foamed and cured.

## Revendications

1. Appareil frigorifique, en particulier appareil frigorifique ménager, avec une carcasse (3) délimitant un espace frigorifique (1) et une porte d'appareil (5), qui présentent respectivement des parois de délimitation intérieures et extérieures (7, 9) ainsi qu'une couche calorifuge (11) générée par moussage entre celles-ci, dans lequel un élément d'isolation, en particulier un panneau d'isolation par le vide (17), est en outre prévu entre les parois de délimitation (7, 9), et dans lequel un composant d'appareil frigorifique, par exemple un condenseur (13), est inséré dans la couche calorifuge (11), et dans lequel l'élément d'isolation est fixé à l'une des deux parois de délimitation (7, 9) après insertion du composant d'appareil frigorifique (13), le panneau d'isolation par le vide (17) étant séparé du composant d'appareil frigorifique (13) par une épaisseur de couche (d1), **caractérisé en ce que** le panneau d'isolation par le vide (17) est fixé sur l'une des deux parois de délimitation (7, 9) à l'aide d'un agent adhésif fluide moussable (19) constitué sous forme de couche calorifuge moussable et de matériau identique à celui de la couche calorifuge (11), et **en ce qu'**une première paroi de délimitation (9), le panneau d'isolation par le vide (17) et le composant d'appareil frigorifique (13) sont agrégés en un corps composite (21) respectivement en une unité de montage préalable avec l'agent adhésif fluide (19).

2. Appareil frigorifique selon la revendication 1, **caractérisé en ce que** le composant d'appareil frigorifique (13) est en contact avec le côté intérieur (15) de la première paroi de délimitation (9) et/ou séparé de la deuxième paroi de délimitation (7) par une deuxième épaisseur de couche (d2).

3. Procédé de fabrication d'un appareil frigorifique selon l'une des revendications précédentes, dans lequel un élément d'isolation, en particulier un panneau d'isolation par le vide (17), est fixé à l'aide d'un agent adhésif fluide (19), qui est constitué de matériau identique à celui de la couche calorifuge (11), au côté intérieur (15) d'une paroi de délimitation (9) d'une carcasse d'appareil frigorifique (3) ou d'une porte d'appareil frigorifique (5).

4. Procédé selon la revendication 3, **caractérisé en ce que** l'élément d'isolation est fixé sur le côté intérieur (15) de la paroi de délimitation (9) après insertion d'un composant d'appareil frigorifique (13), par exemple d'un condenseur.

5. Procédé selon la revendication 3 ou 4, **caractérisé en ce que** pour la préparation d'une étape de prémoussage (II), le panneau d'isolation par le vide (17) est posé dans une chambre de moussage (25) d'un outil de forme (27), l'agent adhésif fluide (19) est appliqué sur le côté du panneau d'isolation par le vide (17) éloigné du fond de la chambre (23) et la chambre de moussage (25) est ensuite fermée par la première paroi de délimitation (9), jusqu'à ce que l'agent adhésif fluide (19) soit moussé et ait durci durant l'étape de prémoussage (II).

6. Procédé selon la revendication 5, **caractérisé en ce que** lors de l'insertion du panneau d'isolation par le vide (17) dans la chambre de moussage (25), les zones périphériques (33) des panneaux d'isolation par le vide (17) sont placées en contact avec les parois de chambre latérales (31) de la chambre de moussage (25).

7. Procédé selon la revendication 5 ou 6, **caractérisé en ce que** le composant d'appareil frigorifique (13) est prépositionné sur le côté intérieur (15) de la première paroi de délimitation (9) avant la réalisation de l'étape de prémoussage (II), en particulier au moyen de points adhésifs (35).

8. Procédé selon la revendication 5, **caractérisé en ce que** pour la préparation d'une étape de prémoussage (II), l'agent adhésif fluide (19) est appliqué sur le côté intérieur (15) de la première paroi de délimitation (9) et le panneau d'isolation par le vide (17) posé sur l'agent adhésif fluide (19), l'assemblage de composants ainsi constitué étant ensuite isolé de manière étanche à la mousse à l'aide d'un outil de forme en forme de capot (27), jusqu'à ce que l'agent adhésif fluide (19) soit moussé et ait durci durant l'étape de prémoussage (II).

9. Procédé selon l'une des revendications 3 à 8, **caractérisé en ce que** l'étape de prémoussage (II) est suivie par une étape de mousse d'isolation (III) durant laquelle la couche calorifuge (11) insérée entre la première et la deuxième paroi de délimitation (7, 9) est moussée et durcie.
